# FASCICULE DE BREVET EUROPEEN

(11) **EP 1 659 769 B1**
(45) Date de publication et mention de la délivrance du brevet: **09.01.2008**
(21) Numéro de dépôt: 05300888.4
(22) Date de dépôt: 03.11.2005
(51) Int. Cl.: H04M 11/06, H04L 29/06, H04L 27/00

(54) **Procédé et dispositif d'émission ou réception d'un message multimédia**
Verfahren und Vorrichtung zum Senden und Empfangen einer Multimedianachricht
Method and device for sending and receiving a multimedia message

(30) Priorité: 17.11.2004 FR 0452662
(43) Date de publication de la demande: 24.05.2006
(73) Titulaire: SAGEM Communication, 75015 Paris (FR)
(72) Inventeur: LELOUP, Philippe, 94130, NOGENT SUR MARNE (FR)
(74) Mandataire: Schmit, Christian Norbert Marie

(56) Documents cités:
- EP-A- 0 647 043
- DEUTSCHE TELEKOM: "Technische Beschreibung des Multimedia Messaging Service (MMS) im Festnetz (Telefonnetz/ISDN) der Deutschen Telekom" 1 TR 141, [Online] 15 octobre 2004 (2004-10-15), pages 1-23, XP002334893 Extrait de l'Internet: URL:http://www.telekom.de/dtag/downloads/1 /1TR141_TB_V1.0.pdf> [extrait le 2005-07-06]

## Description

La présente invention a pour objet un procédé et un dispositif d'émission ou réception d'un message multimédia. Le domaine de l'invention est celui de la téléphonie fixe et mobile et plus particulièrement celui de l'interconnexion des téléphonies fixe et mobile. Un message multimédia est, par exemple, un message MMS (Multimedia Messaging System pour Système de Messagerie Multimédia). D'une manière générale un message MMS est un message pouvant comporter du texte, du son, et des images fixes ou animées. Par la suite on utilise le terme 'message MMS' comme un terme générique désignant les messages électroniques. Un autre exemple de message multimédia est le courriel.

Un but de l'invention est l'optimisation des temps d'émission et de réception d'un message multimédia depuis un poste de téléphonie fixe.

Dans l'état de la technique on connaît des postes fixes raccordés au RTC (Réseau Téléphonique Commuté) capables d'envoyer et de recevoir des messages MMS. Un tel poste fixe est décrit dans le document "Technische Beschreibung des Multimedia Messaging Service (MMS) im Festnetz (Telefonnetz ISDN) der Deutschen Telekom", XP002334893.A cette fin, ces postes téléphoniques, aussi appelés combinés téléphoniques, sont équipés de modems V23 ayant une capacité de transmission de 1200bps (bits par seconde). Il s'agit là d'une modulation dite lente c'est-à-dire ayant une vitesse de transmission faible. Dans le cadre de la transmission de message SMS (Short Message System pour Service de Message Court), qui sont des messages d'une taille inférieure à 200 octets, cette modulation est largement suffisante. Dans l'état de la technique les terminaux existant, capable d'envoyer et de recevoir des messages SMS, ont été adaptés, de manière logicielle, pour pouvoir émettre et recevoir des messages MMS. Les modems « logiciels » pouvant être intégrés sur ce type de combiné, étant donné les puissances de calculs disponibles restent des modems, dit « bas débit » de type V32, 9600bps. Cependant un message MMS peut représenter plus de 100 Kilo-octets (Ko) et donc être long à recevoir ou émettre avec une modulation lente.

Une manière simple de résoudre ce problème consiste à doter le combiné de téléphonie fixe d'un modem capable de mettre en oeuvre une modulation rapide. Malheureusement ces modulations ont des temps de connexions longs ce qui diminue leur intérêt.

Dans l'invention on résout ces problèmes en intégrant dans un combiné de téléphonie fixe un modem capable d'établir une connexion selon une modulation rapide et selon une modulation lente. La modulation rapide est, par exemple, la modulation V90. La modulation lente est, par exemple, la modulation V32 ou V32bis. La modulation utilisée dépend alors de la taille du message à émettre ou à recevoir. On fixe un seuil, par exemple de 30Ko. Si la taille du message est supérieure à ce seuil, alors on utilise la modulation rapide, sinon, on utilise la modulation lente. On garantit ainsi un temps d'émission ou de réception le plus court possible en fonction de la taille du message.

L'invention a donc pour objet un procédé selon la revendication 1.

Avantageusement l'invention est aussi caractérisée en ce que l'élection de la modulation se fait parmi au moins une modulation rapide à connexion lente et une modulation lente à connexion rapide.

Avantageusement l'invention est aussi caractérisée en ce que pour l'émission d'un message la détermination de la taille d'un message multimédia se fait par une mesure de la taille dudit message directement par le poste de téléphonie.

Avantageusement l'invention est aussi caractérisée en ce que pour la réception la taille du message à récupérer est déterminée par le contenu d'un message de notification indiquant la présence d'un message à récupérer sur un serveur.

Avantageusement l'invention est aussi caractérisée en ce que le message de notification est un SMS.

Avantageusement l'invention est aussi caractérisée en ce que le réseau de télécommunication est le réseau téléphonique commuté.

Avantageusement l'invention est aussi caractérisée en ce que le message à émettre ou recevoir est un message multimédia.

Avantageusement l'invention est aussi caractérisée en ce que plusieurs messages devant être reçus ou émis successivement, la taille totale des messages est prise en compte pour l'élection de la modulation.

L'invention a aussi pour objet un dispositif selon la revendication 7.

Avantageusement l'invention est aussi caractérisée en ce que l'élection de la modulation se fait parmi au moins une modulation rapide à connexion lente et une modulation lente à connexion rapide.

Avantageusement l'invention est aussi caractérisée en ce que le message à émettre ou recevoir est un message multimédia.

Avantageusement l'invention est aussi caractérisée en ce que plusieurs messages devant être reçus ou émis successivement, la taille totale des messages est prise en compte pour l'élection de la modulation

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration d'éléments du dispositif selon l'invention permettant la mise en oeuvre du procédé selon l'invention
- Figure 2 : une illustration d'étapes du procédé selon l'invention.

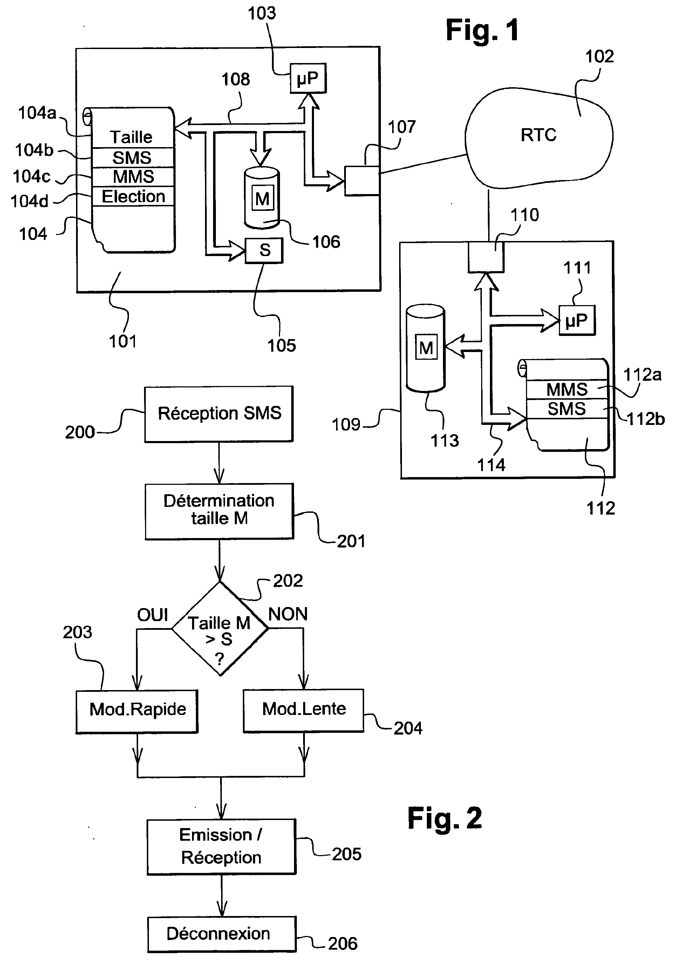

La figure 1 montre un combiné 101 de téléphonie fixe connecté à un réseau 102 de téléphonie commutée aussi connue sous le nom de RTC pour Réseau Téléphonique Commuté. Le combiné 101 comporte un microprocesseur 103, une mémoire 104 de programmes, un mémoire 105 de seuil, une mémoire 106 de message, et un modem 107 connecté au réseau 102.

Dans cette description lorsque l'on prête une action à un appareil, combiné, serveur ou autre, cette action est réalisée par un microprocesseur de cet appareil commandé par des codes instructions enregistrés dans une mémoire de programmes dudit appareil.

La mémoire 104 comporte plusieurs zones chacune comportant des codes instructions pour la mise en oeuvre d'une fonction par le combiné 101. Une zone 104a comporte des codes instructions pour la détermination de la taille d'un ou plusieurs messages MMS. Une zone 104b comporte des codes instructions pour l'émission et la réception de message SMS. Une zone 104c comporte des codes instructions pour l'émission et la réception de message MMS. Une zone 104d comporte des codes instructions pour l'élection d'une modulation.

La mémoire 105 comporte la valeur d'un seuil S permettant l'élection d'une modulation.

La mémoire 106 comporte les messages MMS reçus ou à envoyer.

Le modem 107 est un modem de type V90 apte à établir une connexion selon une modulation rapide, par exemple V90, et une modulation lente, par exemple V32.

Les éléments 103 à 107 sont interconnectés par un bus 108.

La figure 1 montre aussi un serveur 109 connecté au réseau 102 via un modem 110 compatible avec le modem 107. Le serveur 109 comporte aussi un microprocesseur 111, une mémoire 112 de programme, et une mémoire 113 de messages. Les éléments 110 à 113 sont interconnectés par un bus 114.

Une zone 112a comporte des codes instructions pour l'émission et la réception de message SMS. Une zone 112b comporte des codes instructions pour l'émission et la réception de message MMS.

La mémoire 113 comporte les messages MMS en attente de récupération par leurs destinataires finaux. Lorsqu'un message MMS est émis vers un destinataire, ce message est en fait déposé sur un serveur. Ce serveur envoie au destinataire un message de notification, de type SMS, indiquant au destinataire qu'il peut se connecter au serveur pour récupérer le message MMS.

La figure 2 montre une étape 201 dans laquelle le combiné 101 détermine la taille d'un message MMS M. On distingue au moins deux cas de figure.

S'il s'agit d'un message à envoyer alors ce message est enregistré dans la mémoire 106 du combiné 101. Le combiné 101 est donc capable d'en déterminer la taille T. Le message M étant enregistré dans la mémoire 106 il correspond donc à une entrée d'une table d'allocation comportant un descriptif du message M, ce descriptif comportant entre autres la taille dudit message M.

S'il s'agit d'un message à recevoir alors le combiné 101 a reçu, dans une étape 200 préliminaire, un message de notification. Dans la pratique un message de notification est un message SMS. Un message de notification comporte au moins la taille du message à récupérer. La lecture du message de notification permet au combiné 101 de déterminer la taille T du message MMS à récupérer.

Dans une variante de l'invention il y a plusieurs messages MMS à envoyer et/ou à recevoir. Dans ce cas le combiné additionne la taille de tous ces messages pour obtenir la taille T de données allant être échangées au cours de la connexion permettant l'envoi et la réception des messages MMS.

De l'étape 201 le combiné 101 passe à une étape 202 de comparaison de la taille T à un seuil S. Le seuil S est celui enregistré dans la mémoire 105. Dans une mise en oeuvre le seuil S vaut 30Ko. Dans d'autres mises en oeuvres le seuil S à d'autres valeurs comme per exemple, 20Ko, 25Ko, 35Ko ou 40Ko. D'autres valeurs encore sont possibles, soit intermédiaires, soir inférieures, soit supérieures.

Si T est supérieur à S alors le combiné 101 passe de l'étape 202 à une étape 204 de connexion en utilisant une modulation rapide. Sinon le combiné 101 passe de l'étape 202 à une étape 204 de connexion via une modulation lente.

Des modulations rapides sont, par exemple, les modulations V90 ou V92. Des modulations lentes sont, par exemple les modulations V32 ou V32bis. Dans un exemple de mise en oeuvre le combiné utilise les modulations V90 ou V32. Les modulations lentes ont des débits de l'ordre de 9600 bps, les modulations rapides ayant des débits supérieurs à 33600 bps.

Le combiné 101 établit dont une connexion avec le serveur 109 selon la modulation élue suite au résultat de l'étape 202.

Des étapes 203 et 204 le combiné passe à une étape 205 classique d'émission et/ou de réception de message MMS. Dans cette étape le ou les messages à émettre sont lus, par le combiné 101, dans la mémoire 106 puis émis vers le serveur 109. Le serveur 109 enregistre ces messages émis et envoie les messages de notifications correspondant. Le ou les messages devant être reçu par me combiné 101 sont lus, par le serveur 109, dans la mémoire 113 et envoyé par ledit serveur au combiné 101 qui les enregistre dans la mémoire 106.

Une fois ces opérations d'émission et de réception réalisées, le combiné 101 passe à une étape 206 de déconnexion au cours de laquelle le combiné 101 interrompt la connexion avec le serveur 109.

Dans l'invention on optimise donc le temps de connexion entre le serveur 109 et le combiné 101. Si le message est de petite taille, inférieure ou égale à S, alors le combiné utilise une modulation lente mais ayant une connexion rapide. Ainsi le temps global pour récupérer un petit message en mettant en oeuvre une modulation lente est inférieur au temps qu'il faudrait pour récupérer le même petit message avec une modulation rapide car ladite modulation rapide a un temps de connexion plus long.

## Revendications

1. - Procédé pour optimiser le temps d'émission ou réception d'au moins un message multimédia sur un réseau (102) de télécommunications dans lequel un poste (101) de téléphonie fixe connecté au réseau de télécommunication met en oeuvre les étapes suivantes :
- détermination (201) de la taille du au moins un message multimédia à émettre ou recevoir,
- comparaison (202) de la taille déterminée à un seuil,
- élection (203-204) d'une modulation en fonction du résultat de la comparaison,
- l'élection de la modulation se fait parmi au moins une modulation rapide à connexion lente et une modulation lente à connexion rapide,
- connexion (203-204) au serveur de messagerie en utilisant la modulation élue,
- émission ou réception (205) d'au moins un message,
- déconnexion (206) du serveur.

2. - Procédé selon la revendication 1 **caractérisé en ce que** pour l'émission d'un message la détermination de la taille d'un message multimédia se fait par une mesure de la taille dudit message directement par le poste de téléphonie.

3. - Procédé selon l'une des revendications 1 ou 2, **caractérisé en ce que** pour la réception la taille du message à récupérer est déterminée par le contenu d'un message de notification indiquant la présence d'un message à récupérer sur un serveur.

4. - Procédé selon la revendication 3, **caractérisé en ce que** le message de notification est un SMS (200).

5. - Procédé selon l'une des revendications 1 à 4, **caractérisé en ce que** le réseau de télécommunication est le réseau téléphonique commuté.

6. - Procédé selon l'une des revendications 1 à 5, **caractérisé en ce que** plusieurs messages devant être reçus ou émis successivement, la taille totale des messages est prise en compte pour l'élection de la modulation.

7. - Dispositif pour optimiser le temps d'émission ou réception d'au moins un message multimédia sur un réseau de télécommunications comportant un poste (101) de téléphonie fixe connecté au réseau de télécommunication, ledit dispositif comportant:
- des moyens (103, 104a) pour déterminer la taille du au moins un message multimédia à émettre ou recevoir,
- une mémoire (105) de seuil pour l'enregistrement d'une valeur seuil de la taille d'un message multimédia,
- un modem (107) apte à se connecter à un serveur selon au moins 2 modulations,
- des moyens (103, 104d) d'élection d'une modulation en fonction du contenu de la mémoire de seuil et de la taille déterminée,
- l'élection de la modulation se fait parmi au moins une modulation rapide à connexion lente et une modulation lente à connexion rapide.

8. - Dispositif selon la revendication 7, **caractérisé en ce que** plusieurs messages devant être reçus ou émis successivement, la taille totale des messages est prise en compte pour l'élection de la modulation.

## Claims

1. A method to optimize the sending or receiving time of at least one multimedia message over a telecommunications network (102) in which a fixed telephony set (101) connected to the telecommunication network implements the following steps:
- determination (201) of the size of at least one multimedia message to send or receive,
- comparison (202) of the specified size to a threshold,
- choosing (203-204) a modulation according to the comparison result,
- the choice of the modulation is made from among at least one fast modulation at slow connection and one slow modulation at fast connection,
- connection (203-204) to the messenger server by utilizing the chosen modulation,
- sending or receiving (205) at least one message,
- disconnection (206) from the server.

2. The method according to claim 1 **characterized in that** to send a message, the size of a multimedia message is determined by measuring the size of said message directly by the telephony set.

3. The method according to one of claims 1 or 2, **characterized in that** for reception, the size of the message to retrieve is determined by the content of a notification message indicating the presence of a message to retrieve on a server.

4. The method according to claim 3, **characterized in that** the notification message is an SMS (200).

5. The method according to one of claims 1 to 4, **characterized in that** the telecommunication network is the switched telephone network.

6. The method according to one of claims 1 to 5, **characterized in that** several messages are to be received or sent successively, the total size of the messages is taken into consideration to choose the modulation.

7. A device to optimize the sending or receiving time of at least one multimedia message over a telecommunications network comprising a fixed telephony set (101) connected to the telecommunication network, said device comprising:
- means (103, 104a) to determine the size of the at least one multimedia message to send or receive,
- a threshold memory (105) to record a threshold value of the size of a multimedia message,
- a modem (107) able to be connected to a server according to at least 2 modulations,
- means (103, 104d) to choose a modulation according to the content of the threshold memory and the specified size,
- the choice of the modulation is made from among at least one fast modulation at slow connection and one slow modulation at fast connection.

8. The device according to claim 7, **characterized in that** several messages are to be received or sent successively, the total size of the messages is taken into consideration to choose the modulation.

## Patentansprüche

1. Verfahren zur Optimierung der Sende- oder Empfangszeit mindestens einer Multimediabotschaft auf einem Telekommunikationsnetz (102), bei dem eine Telefonfeststation (101), die an das Telekommunikationsnetz angeschlossen ist, die folgenden Schritte einsetzt:
- Bestimmung (201) der Größe der mindestens einen zu sendenden oder zu empfangenden Multimediabotschaft,
- Vergleich (202) der bestimmten Größe mit einer Schwelle,
- Wahl (203-204) einer Modulation in Abhängigkeit vom Ergebnis des Vergleichs,
- wobei die Wahl der Modulation unter mindestens einer schnellen Modulation mit langsamem Anschluss und einer langsamen Modulation mit schnellem Anschluss erfolgt,
- Anschluss (203-204) an den Meldungsserver unter Verwendung der gewählten Modulation,
- Senden oder Empfangen (205) mindestens einer Botschaft,
- Abschalten (206) des Servers.

2. Verfahren nach Anspruch 1, **dadurch gekennzeichnet, dass** für das Senden einer Botschaft die Bestimmung der Größe einer Multimediabotschaft durch eine Messung der Größe der Botschaft direkt durch die Telefonstation erfolgt.

3. Verfahren nach einem der Ansprüche 1 oder 2, **dadurch gekennzeichnet, dass** für den Empfang die zu erfassende Größe der Botschaft durch den Inhalt einer Mitteilungsbotschaft bestimmt wird, die das Vorhandensein einer auf einem Server zu erfassenden Botschaft anzeigt.

4. Verfahren nach Anspruch 3, **dadurch gekennzeichnet, dass** die Mitteilungsbotschaft eine SMS (200) ist.

5. Verfahren nach einem der Ansprüche 1 bis 4, **dadurch gekennzeichnet, dass** das Telekommunikationsnetz das Mobiltelefonnetz ist.

6. Verfahren nach einem der Ansprüche 1 bis 5, **dadurch gekennzeichnet, dass**, wenn mehrere Botschaften nacheinander empfangen oder gesandt werden sollen, die Gesamtgröße der Botschaften für die Wahl der Modulation berücksichtigt wird.

7. Vorrichtung zur Optimierung der Sende- oder Empfangszeit mindestens einer Multimediabotschaft auf einem Telekommunikationsnetz, umfassend eine Telefonfeststation (101), die an das Telekommunikationsnetz angeschlossen ist, wobei die Vorrichtung umfasst:
- Mittel (103, 104a) zur Bestimmung der Größe der mindestens einen zu sendenden oder zu empfangenden Multimediabotschaft,
- einen Schwellenspeicher (105) für die Aufzeichnung eins Schwellenwerts der Größe einer Multimediabotschaft,
- ein Modem (107), das sich an einen Server nach mindestens 2 Modulationen anschließen kann,
- Mittel (103, 104d) zur Auswahl einer Modulation in Abhängigkeit vom Inhalt des Schwellenspeichers und der bestimmten Größe,
- wobei die Wahl der Modulation unter mindestens einer schnellen Modulation mit langsamem Anschluss und einer langsamen Modulation mit schnellem Anschluss erfolgt.

8. Vorrichtung nach Anspruch 7, **dadurch gekennzeichnet, dass**, wenn mehrere Botschaften nacheinander empfangen oder gesandt werden sollen, die Gesamtgröße der Botschaften für die Wahl der Modulation berücksichtig wird.
